# EUROPEAN PATENT SPECIFICATION

(11) **EP 1 112 828 B1**
(45) Date of publication and mention of the grant of the patent: **06.10.2004**
(21) Application number: 99931265.5
(22) Date of filing: 22.07.1999
(51) Int. Cl.: B29C 33/38, B29C 33/40

(54) **METHOD FOR MANUFACTURING MOLDS SUITABLE FOR PLASTIC INJECTION**
VERFAHREN ZUM HERSTELLEN VON ZUM SPRITZGIESSEN GEEIGNETEN FORMEN
PROCEDE DE FABRICATION DE MOULES DESTINE A L'INJECTION DE PLASTIQUES

(30) Priority: 13.04.1999 ES 9900760
(43) Date of publication of application: 04.07.2001
(73) Proprietor: Condes Condes, Angel, 03440 Ibi (ES)
(72) Inventor: Condes Condes, Angel, 03440 Ibi (ES)
(74) Representative: Fernandez Lerroux, Aurelio
(86) International application number: PCT/ES1999/000234
(87) International publication number: WO 2000/061346

(56) References cited:
- US-A- 5 500 069
- US-A- 5 641 448

## Description

The invention relates to a method for manufacturing moulds suitable for plastic injection moulding capable of producing several prototype plastic parts using computer aided design. The purpose of this method lies in obtaining from same a mould for plastic injections, whose inserts have been done without chip release using CAD or computer assisted design, as well as the STL system to build the insert in three dimensions, using galvanoplasty for the metallic cover of the prototype and founding for the filling of the prototype, the assembling of the mounted mould being carried out in the traditional way.

### FIELD OF THE INVENTION

This invention is applicable to the industry specializing in the manufacture of moulds for plastic injection.

### BACKGROUND OF THE INVENTION

The applicant knows of the existence of a project which dates from the year 1998, relative to the introduction of innovative technology in the manufacturing process of plastic parts by means of rapid prototyping and tooling.

After carrying out an important study on said project, it has been found that master parts can be built with amazing quality, precision and speed.

As a consequence of the aforementioned, moulds for obtaining parts have been built, having followed on with the project, but the existence of a fundamental drawback has been determined consisting of the fact that only a single part for each mould can be obtained.

Therefore, knowing the needs of all the producers of plastic materials parts, which consist of obtaining a minimum of 100 parts and with definitive materials, research has been focused on obtaining quick and precise moulds for adapting to existing current demand.

It has been seen that a huge gap is to be found in this current demand not only on a European level, but also on a world level, a situation which was directly confirmed at the EUROMOULD trade fair, considered the most important trade fair in the technical sector, wherein it was confirmed that the technologies displayed there did not fulfill the requisites demanded by the manufacturers, these being mainly, quality and precision, from whose anomalies stem a main factor, in particular, the delivery date.

The obvious solution to the problems existing at present would be to have a method for manufacturing moulds, suitable for plastic injection, in which a quality with specular polishing, textured, which allows the reproduction of the CAD drawing, the injection being carried out in any type of technical plastic with a precision of 0.05 millimeters, saving 40% of the time as far as delivery dates are concerned, and with a saving of 35% regarding the final cost.

From US-A-5 641 448 a method for the production of plastic injection moulds for prototype parts is known. In this known method a prototype is generated in a CAD-system. Afterwards the CAD-data are input into a software in which from the CAD-data of the prototype mould-data of a mould of the prototype are generated. Based on these mould-data by means of a stereolithography machine a plastic mould of the prototype is fabricated. This plastic mould is afterwards coated with a metal coating. The coated plastic mould is used as mould for injection moulding a limited number of prototypes.

US-A-5 500 069 discloses a method for controlling a stereolithography machine.

It is therefore an object of the present invention, to provide a method for the manufacturing of long-lasting moulds, which are suitable for plastic injection moulding and which are capable of producing a sufficient number of prototype plastic parts.

This object is solved according to the invention by a method having the features of claim 1.

Particular embodiments of the invention are the subject of the dependent claims.

The method for manufacturing moulds suitable for plastic injections which the invention proposes, in itself constitutes an obvious novelty within its field of application, achieving a mould for plastic injection whose inserts have been done without chip release with high quality delimited precision, timesaving and final product price.

More specifically, the method for manufacturing moulds, suitable for plastic injections, object of the invention, is constituted from a CAD geometry design, that is to say, done by computer, to which parting lines are added, and starting from this addition, the inserts are obtained in the way they are going to be used in the mould.

Once the CAD insert is obtained, the insert negative in question must be built, an operation which, like the previous ones, is done by CAD, and once this process is finalized, it is converted into a STL file for the file to be built in three dimensions, in particular, for the negative of the prototype to be built in a stereolithographic machine.

When this part created by the machine is ready, it undergoes refining and polishing.

In order to obtain the metallic insert in copper, nickel, etc., it is done by electrodeposition or galvanoplasty, meaning that a metallic thickness for the prototype will be obtained according to the time it is situated inside of the bath.

Once this process has ended, the resulting cavity is filled with founding of iron, aluminum, copper, bronze or epoxy resin, with the aim of obtaining a solid insert in order to be able to make refrigeration channels, make the ejection, machine at the material entrance and be able to screw it to the mould-holder.

The final result is a mould for plastic injection, the inserts of which have been done without chip release.

The invention, in the same way, allows for the obtainment of electrode constructions for electroerosion machines.

### PREFERRED EMBODIMENT OF THE INVENTION

The method proposed for manufacturing moulds suitable for plastic injection is constituted starting from the preparation of the plans, each part's ways and means of operation, then going on to the graphic work station, and with Solid View software the three-dimensional CAD designs will be worked on with the aim of obtaining the files of the parts and prototypes desired.

Subsequently, with these files and with a stereolithographic machine one proceeds to the building of the master male die in photosensitive resin, using a laser beam, which has a very high degree of precision.

Once the master parts are obtained the next step is the building of the inserts of the parts for the moulds using metallic replacement and in this phase different deposition technologies have to be tried, following the advice of the specialist in surface treatments.

Once the metallic inserts are obtained they have to be machined externally to obtain the desired dimension in each prototype, as well as equipping them with centering drill holes.

Having finished the prototype phase the next step is to go on to its insertion in the mould-holder, done in the moulds workshop providing it with all the necessary mechanisms and workings so that they operate like any other traditional mould.

Finally, the mould tests shall be carried out, as well as the results obtained in the different phases, both in the precision of the parts and in the different materials which they will be able to produce.

A milling-machine, grinder and column drills with the relevant accessories shall be used as auxiliary machinery.

## Claims

1. Method for manufacturing moulds suitable for plastic injection moulding capable of producing several prototype plastic parts, using computer aided design **characterised in that** it is constituted starting from a geometry desgined by CAD, to hich parting lines are added on a CAD pattern, thereby obtaining the mould portions, core and cavity, which are to be employed in the mould itself to produce said prototype parts, the design being done in three dimensions and once the CAD mould portions are obtained, negative mould portions are created, also in CAD, which are then converted into a STL file in order to make the negative mould portions in a stereolithographic machine, then the parts created by the stereolithographic machine as the negative mould portions being finished and polished.

2. Method for manufacturing moulds suitable for plastic injection moulding capable of producing several prototype plastic parts according to claim 1, **characterised in that** the male parts will be manufactured in photosensitive resin using laser beam.

3. Method for manufacturing moulds suitable for plastic injection moulding capable of producing several prototype plastic parts according to one or more of the previous claims, **characterised in that** the obtaining of the metal mould portion in copper or nickel is made by a metal deposition, electrodeposition or galvanoplasty process, thereby obtaining a positive shell-like metal mould portion out of the negative mould portions created on the stereolithographic machine, with the metal shell-like mould portions having an inner surface complementary to an outer surface of the prototype part, and the metal shell-like mould portions having a specific thickness in accordance with the time employed within the electrodeposition or galvanoplasty process.

4. Method for manufacturing moulds suitable for plastic injection moulding capable of producing several prototype plastic parts according to one or more of the previous claims, **characterised in that** the resulting metal mould portions shells, core and cavity, obtained from the metal deposition process, are back-filled with founding of iron, aluminium, copper, bronze or epoxy resin, thereby providing a solid support in order to obtain solid mould portions, core and cavity, provided with centering drills, then being inserted in the mould holder.

## Patentansprüche

1. Verfharen zum Herstellen von zum spritzgiessen geeigneten Formen, fähig zur Erzeugung mehrerer prototypischen Teile aus Kunststoff und, die eine computergestützte Formgestaltung verwendet, **dadurch gekennzeichnet, dass** sie so ausgebildet ist, dass sie aus einer mit CAD gestalteten Geometrie ausgeht, welcher in einer CAD-Vorlage Trennunglinien hinzugefügt werden, wobei auf diese Weise die Formteile, Kern und Kavität, die in der eigentlichen Form für die Herstellung der besagten prototypischen Teile eingesetzt werden, erhalten werden, wobei die Formgestaltung dreidimensional durchgeführt wird und, sobald die Formteile mit CAD erhalten wurden, die negativen Formteile ebenfalls mit CAD erzeugt werden, die anschließend in einer STL-Datei umgewandelt werden, um die negativen Formteile in einer stereolithographischen Maschine zu erzeugen, wobei anschließend die mit der stereolithographischen Maschine als negativen Formteilen erzeugten Teile fertig gestellt und geschliffen werden.

2. Verfharen zum Herstellen von zum spritzgiessen geeigneten Formen, fähig zur Erzeugung mehrerer prototypischen Teile aus Kunststoff nach Anspruch 1, **dadurch gekennzeichnet, dass** die Kernteile aus lichtempfindlichem Harz unter Anwendung eines Laserstrahlbündels hergestellt werden.

3. Verfharen zum Herstellen von zum spritzgiessen geeigneten Formen, fähig zur Erzeugung mehrerer prototypischen Teile aus Kunststoff nach einem oder mehreren der vorhergehenden Ansprüchen, **dadurch gekennzeichnet, dass** die Erzeugung des metallischen Formteils aus Kupfer oder Nickel durch ein Metall-Abscheidungsverfahren, ein Verfahren zur elektrolytischen Abscheidung oder durch Galvanoplastik erfolgt, wobei auf diese Weise ein einer Schale ähnlicher positiver metallischer Formteil aus der negativen in der stereolithographischen Maschine erzeugten Formteilen erhalten wird und wobei die einer Schale ähnlichen metallischen Formteile eine innere die äußere Oberfläche des prototypischen Teils ergänzende Oberfläche aufweisen und die einer Schale ähnlichen metallischen Formteile eine spezifische der in der Galvanoplastik oder elektrolytischen Abscheidung angewandten Zeit entsprechende Dicke haben.

4. Verfharen zum Herstellen von zum spritzgiessen geeigneten Formen, fähig zur Erzeugung mehrerer prototypischen Teile aus Kunststoff nach einem oder mehreren der vorhergehenden Ansprüchen, **dadurch gekennzeichnet, dass** die aus den metallischen Formteilen resultierenden und im Verfahren der metallischen Abscheidung erhaltenen Schalen, Kern und Kavität, mit einem Guss aus Eisen, Aluminium, Kupfer, Bronze oder Epoxydharz gefüllt werden, wobei auf diese Weise eine solide Stütze bereitgestellt wird, mit dem Zweck feste Formteile, Kern und Kavität, zu erhalten, die mit Zentrierbohrungen versehen sind und anschließend im Halter der Form eingeführt werden.

## Revendications

1. Procédé de fabrication de moules destiné a l' injection de plastiques apte à produire diverses parties prototypiques en plastique qui utilise un dessin par ordinateur, **caractérisé en ce qu'**il est constitué en commençant à partir d'une géométrie dessinée par CAD, à laquelle on ajoute les lignes de séparation dans un patron de CAD, en obtenant de cette façon les parties du moule, mâle et cavité, qui vont être utilisées dans le propre moule pour produire lesdites parties prototypiques, le dessin étant réalisé en trois dimensions et une fois que l'on a obtenu les parties du moule en CAD, on créé les parties négatives du moule, aussi en CAD, **en ce qu'**à la suite elles deviennent un fichier STL pour réaliser les parties négatives du moule dans une machine stéréolithographique, en terminant et en polissant à la suite les parties créées au moyen de la machine stéréolithographique comme les parties négatives du moule.

2. Procédé de fabrication de moules destiné a l' injection de plastiques apte à produire diverses parties prototypiques en plastique, selon la revendication 1, **caractérisé en ce que** les parties mâles seront fabriquées en résine photosensible en utilisant un faisceau de rayons laser.

3. Procédé de fabrication de moules destiné a l' injection de plastiques apte à produire diverses parties prototypiques en plastique, selon une ou plusieurs des revendications antérieures, **caractérisé en ce que** l'obtention de la partie métallique du moule en cuivre ou nickel est réalisée par un procédé de dépôt de métal, électrodéposition ou galvanoplastie, en obtenant de cette façon une partie positive du moule métal similaire à une coquille des parties négatives du moule créées dans la machine stéréolithographique, les parties métalliques du moule similaires à une coquille ayant une surface intérieure complémentaire à une surface extérieure de la partie prototypique, et les parties métalliques du moule similaires a une coquille ayant une épaisseur spécifique selon le temps employé pour le procédé de galvanoplastie ou électrodéposition.

4. Procédé de fabrication de moules destiné a l' injection de plastiques apte à produire diverses parties prototypiques en plastique, selon une ou plusieurs des revendications antérieures, **caractérisé en ce que** les coquilles résultantes des parties métalliques du moule, mâle et cavité, obtenues à partir du procédé de dépôt métallique, sont remplies avec une fonte de fer, aluminium, cuivre, bronze ou résine époxydique, en fournissant de cette façon un support solide afin d'obtenir des parties solides du moule, mâle et cavité, munies d'alésages de centrage, qui sont insérés par la suite dans le support du moule.
